# EUROPÄISCHE PATENTANMELDUNG

(11) **EP 2 299 011 A1**
(43) Veröffentlichungstag der Anmeldung: **23.03.2011**
(21) Anmeldenummer: 09011930.6
(22) Anmeldetag: 18.09.2009
(51) Int. Cl.: E03C 1/322, E03D 11/14, F16B 37/08, F16B 39/12

(54) **Befestigungsvorrichtung für einen Sanitärausstattungsgegenstand**

(71) Anmelder: KERAMAG Keramische Werke Aktiengesellschaft, 40878 Ratingen (DE)
(72) Erfinder: Brohammer, Bernd, 40476 Düsseldorf (DE)
(74) Vertreter: Reynolds, Julian David

(57) **Zusammenfassung**

Es wird eine Befestigungsvorrichtung für einen Sanitärausstattungsgegend (30) sowie ein Verfahren zur Verwendung der Befestigungseinrichtung beschrieben. Unter Sanitärausstattungsgegenstand sind dabei insbesondere Waschbecken, Waschtische, Bidets, Klosets, Urinale, Spülkästen, WC's in Kombination mit Spülkästen und dergleichen zu verstehen. Die Befestigungsvorrichtung besteht aus einem am Sanitärausstattungsgegenstand (30) vormontierbaren Hülsenteil (10) und einem Arretierungsteil (20). Das Hulsenteil kann in elne Befestigungsöffnung (31) des Sanitärausstattungsgegenstands (30) eingesetzt werden. Es weist an seinem Innendurchmesser Vorsprünge (12) zur Verrastung mit einer Wandschraube sowie an seinem Außendurchmesser ein Außengewinde (14) auf. Das Arretierungsteil (20) besitzt ein Innengewinde (22) und ist damit auf das Außengewinde (14) des Hülsenteils aufschraubbar.
Bei der Montage wird das Hülsenteit (10) zusammen mit dem Arretierungsteil (20) am Sanitärgegenstand (30) vormontiert, wobei das Arretierungsteil (20) an der Raumseite des Sanitärgegenstandes (30) auf das Hülsenteil (10) aufgeschraubt wird. Anschlie ßend wird der Sanitärgegenstand mit der vormontierten Befestigungsvorrichtung auf die Wandschraube aufgeschoben, wobei die Verrastungen (12) des Hülsenteits eine zuverlässige Fixierung des Sanitärgegenstandes gewährleisten. Zur endgültigen Befestigung sind einige wenige Umdrehungen des Arretierungsteils (20) ausreichend.

## Beschreibung

Die Erfindung betrifft eine Vorrichtung und ein Verfahren zur Befestigung von Sanitärausstattungsgegenständen, insbesondere für Waschbecken, Waschtische, Bidets, Klosets, Urinale, Spülkästen, WC's in Kombination mit Spülkästen und dergleichen.

Derartige Sanitärausstattungsgegenstände werden üblicherweise über Wandschrauben an eine Wand aufgehängt bzw. an dieser befestigt. Bei der Montage dieser Sanitärausstattungsgegenstände werden diese üblicherweise auf die Wandschrauben aufgeschoben, wobei die Sanitärausstattungsgegenstände erst dann an der Wand gesichert sind, wenn eine entsprechende Mutter auf die Wandschrauben aufgeschraubt wird. Somit ist insbesondere die Montage für eine einzelne Person problematisch.

Ferner ist es zeitaufwendig die Mutter über das gesamte Gewinde auf die Wandschraube aufzuschrauben, da die Wandschrauben für verschiedenste Sanitärausstattungsgegenstände verhältnismäßig lang sind und daher das Aufschrauben langwierig und umständlich ist.

Daher ist es Aufgabe der vorliegenden Erfindung, eine Vorrichtung und ein Verfahren zur Befestigung von Sanitärausstattungsgegenständen bereitzustellen, wodurch die Montage der Sanitärausstattungsgegenstände an der Wand vereinfacht wird und diese vorzugsweise besonders schnell und effizient befestigt werden können.

Diese Aufgabe wird durch eine Vorrichtung mit den Merkmalen von Anspruch 1 sowie ein Verfahren mit den Merkmalen von Anspruch 7 gelöst.

Der Erfindung liegt der Gedanke zugrunde, dass durch die erfindungsgemäße Vorrichtung und das erfindungsgemäße Verfahren der Sanitärausstattungsgegenstand bereits nach dem Aufschieben auf die Wandschrauben mit jeweils vormontierten Hülsenteilen vorläufig durch jeweils ein mit den Hülsenteilen zusammenwirkendem Arretierungsteil gesichert wird, welches lediglich für die Endmontage mittels eines handelsüblichen Montageschlüssels durch wenige Umdrehungen endgültig an der Wand befestigt wird.

Die erfindungsgemäße Befestigungsvorrichtung für einen Sanitärausstattungsgegenstand weist zumindest ein am Sanitärausstattungsgegenstand vormontierbares Hülsenteil, welches in eine Befestigungsöffnung des Sanitärausstattungsgegenstands einsetzbar ist und welches bei der Anbringung des Sanitärausstattungsgegenstands an einer Wand im am Sanitärausstattungsgegenstand vormontierten Zustand mit einer aus der Wand hervorstehenden Wandschraube in Eingriff bringbar ist, und zumindest ein Arretierungsteil auf, welches derart mit dem Hülsenteil zusammenwirkt, dass der Sanitärausstattungsgegenstand durch eine Zugkraft auf die Wandschraube an der Wand befestigt wird, wobei das Arretierungsteil die Zugkraft auf das Hülsenteil ausübt, wobei das Hülsenteil bei der Montage diese Zugkraft auf die Wandschraube überträgt und wobei das Arretierungsteil bei der Montage diese Zugkraft auf den Sanitärausstattungsgegenstand ausübt.

Dadurch dass das Hülsenteil zusammen mit dem Arretierungsteil am Sanitärausstattungsgegenstand vormontiert wird und anschließend daran an der Wandschraube nach dem Aufschieben durch das Hülsenteil gesichert ist, ist es lediglich erforderlich, dass das Arretierungsteil mit wenigen Umdrehungen eine Zugkraft auf das Hülsenteil ausübt und dadurch der Sanitärausstattungsgegenstand an der Wand endgültig montiert wird. Somit ist es durch das Aufschieben des Sanitärausstattungsgegenstands, welcher mit dem Hülsenteil und dem Arretierungsteil vorinstalliert ist, auf die Wandschraube möglich, dass die Montage von einer einzelnen Person durchgeführt wird, ohne dass die Gefahr des Abrutschens des Sanitärausstattungsgegenstands von den Wandschrauben besteht. Des Weiteren ist die Montage des Sanitärausstattungsgegenstands besonders schnell und effizient, da nach dem Aufschieben des Sanitärausstattungsgegenstands nur noch wenige Umdrehungen, insbesondere maximal drei Umdrehungen des Arretierungsteils erforderlich sind, um den Sanitärausstattungsgegenstand endgültig an der Wand zu befestigen. Ein langwieriges Aufschrauben einer Mutter auf die Wandschraube zur Endmontage des Sanitärausstattungsgegenstands entfällt somit in besonders vorteilhafter Art und Weise.

Darüber hinaus ist eine einfache Demontage des Sanitärausstattungsgegenstands möglich, wobei lediglich das Arretierungsteil von dem Hülsenteil gelöst werden muss und anschließend daran der Sanitärausstattungsgegenstand von den Wandschrauben abgezogen werden kann, wobei jedoch das Hülsenteil an den Wandschrauben verbleibt und ggf. für eine erneute neue Montage genutzt werden kann.

Weitere vorteilhafte Ausgestaltungen ergeben sich aus den Unteransprüchen. So ist es insbesondere von Vorteil, wenn das vormontierbare Hülsenteil an seinem Innendurchmesser Vorsprünge aufweist, welche die Zugkraft bei der Montage auf die Wandschraube übertragen, wobei die Vorsprünge bereits ohne Ausübung der Zugkraft durch das Arretierungsteil derart mit der Wandschraube zusammenwirken, dass der Sanitärausstattungsgegenstand an der Wandschraube fixiert bzw. gesichert wird.

Gemäß einer bevorzugten Ausführungsform weist das Hülsenteil einen Kragen auf, welcher im vormontierten Zustand an der Wand zugewandten Seite des Sanitärausstattungsgegenstands derart vorgesehen ist, dass der Sanitärausstattungsgegenstand zusammen mit dem Hülsenteil auf die Wandschraube aufschiebbar ist. Der Kragen ermöglicht dabei eine formschlüssige Übertragung der Zugkraft des Arretierungsteils auf den Sanitärausstattungsgegenstand in besonders einfacher Art und Weise.

Ein weiterer Vorteil der Erfindung liegt darin, dass der Kragen in axiale Richtung des Hülsenteils eine derartige Flexibilität aufweist, dass der Kragen bei der Montage durch die Zugkraft des Arretierungsteils in Richtung der Wand verformt wird. Somit kann der Sanitärausstattungsgegenstand in flexibler und sicherer Art und Weise an der Wand endgültig befestigt werden.

Wenn das Hülsenteil an dem dem Kragen entgegen gesetzten Ende ein Außengewinde aufweist, welches mit einem Innengewinde des Arretierungsteils zur Aufbringung der Zugkraft in Eingriff bringbar ist, so kann die Zugkraft in besonders effektiver Art und Weise von dem Arretierungsteil auf das Hülsenteil ausgeübt werden, um den Sanitärausstattungsgegenstand an der Wand zu befestigen.

Gemäß einer weiteren bevorzugten Ausführungsform weist das Arretierungsteil eine Aufnahme für einen handelsüblichen Montageschlüssel auf, insbesondere einen metrischen Kopf, um den Sanitärausstattungsgegenstand in einfacher und effektiver Art und Weise an der Wand zu montieren.

Das erfindungsgemäße Verfahren zur Befestigung von Sanitärausstattungsgegenständen weist folgende Schritte auf:

Vorinstallation eines Hülsenteils in eine Befestigungsöffnung des Sanitärausstattungsgegenstands vor dem Anbringen des Sanitärausstattungsgegenstands an einer Wand, wobei ein Arretierungsteil an dem Hülsenteil angebracht wird,

Aufschieben des Sanitärausstattungsgegenstands zusammen mit dem vormontierten Hülsenteil auf eine Wandschraube bis zur Anlage des Sanitärausstattungsgegenstands an der Wand,

Befestigen des Sanitärausstattungsgegenstands an der Wand durch Aufbringung einer Zugkraft durch ein Arretierungsteil, welches derart mit dem Hülsenteil zusammenwirkt, dass der Sanitärausstattungsgegenstand durch die Zugkraft auf die Wandschraube an der Wand befestigt wird, wobei die Zugkraft durch das Arretierungsteil auf das Hülsenteil ausgeübt wird, wobei diese Zugkraft durch das Hülsenteil bei der Wandmontage auf die Wandschraube übertragen wird und wobei diese Zugkraft auf den Sanitärausstattungsgegenstand durch das Arretierungsteil bei der Montage ausgeübt wird.

Gemäß dem erfindungsgemäßen Verfahren kann somit ein Sanitärausstattungsgegenstand in besonders schneller und effektiver Art und Weise an der Wand montiert werden, wobei das am Sanitärausstattungsgegenstand vormontierte Hülsenteil zusammen mit dem Arretierungsteil ein Aufschieben dieser vorinstallierten Elemente auf die Wandschrauben ermöglicht und dadurch der Sanitärausstattungsgegenstand nach dem Aufschieben auf die Wandschrauben vorläufig an dieser gesichert ist und lediglich durch maximal drei Umdrehungen des Arretierungsteils endgültig an der Wand montiert werden kann.

Insbesondere kann der Sanitärausstattungsgegenstand zusammen mit dem Hülsenteil und dem Arretierungsteil bereits beim Hersteller vormontiert werden, so dass bei der Montage vor Ort lediglich der derart vormontierte Sanitärausstattungsgegenstand auf die Wandschrauben aufgeschoben wird und die Zugkraft durch das Arretierungsteil mittels weniger Umdrehungen auf die Wandschrauben aufgebracht wird, so dass der Sanitärausstattungsgegenstand endgültig an der Wand befestigt ist.

Des Weiteren ist es von Vorteil, wenn am Innendurchmesser des vormontierbaren Hülsenteils Vorsprünge vorgesehen sind, durch welche die Zugkraft bei der Montage auf die Wandschraube übertragen wird, wobei die Vorsprünge bereits ohne Ausübung der Zugkraft durch das Arretierungsteil derart mit der Wandschraube zusammenwirken, dass der Sanitärausstattungsgegenstand an der Wandschraube fixiert wird.

Vorteilhafterweise wird ein Innengewinde des Arretierungsteils mit einem Außengewinde des Hülsenteils derart verschraubt, dass bei der Montage der Sanitärausstattungsgegenstand zwischen einem am Hülsenteil angebrachten Kragen und dem Arretierungsteil unter Aufbringung der Zugkraft endgültig an der Wand fixiert wird.

Nachfolgend wird die Erfindung rein beispielhaft anhand der beigefügten Figuren beschrieben.

Es zeigt:
Fig. 1 eine perspektivische Ansicht des Hülsenteils der Erfindung;
Fig. 2 eine Seitenansicht des Hülsenteils von Fig. 1;
Fig. 3 eine perspektivische Ansicht des Arretierungsteils der erfindungsgemäßen Vorrichtung;
Fig. 4 eine Seitenansicht des Arretierungsteils von Fig. 3;
Fig. 5a, b, c und d die Vorinstallation der erfindungsgemäßen Befestigungsvorrichtung.
Fig. 6 zeigt das Aufschieben des vormontierten Sanitärausstattungsgegenstands auf die Wandschraube;
Fig. 7 zeigt das endgültige Befestigen des Sanitärausstattungsgegenstands an der Wand; und
Fig. 8a, b und c zeigen die Deinstallation der erfindungsgemäßen Befestigungsvorrichtung.

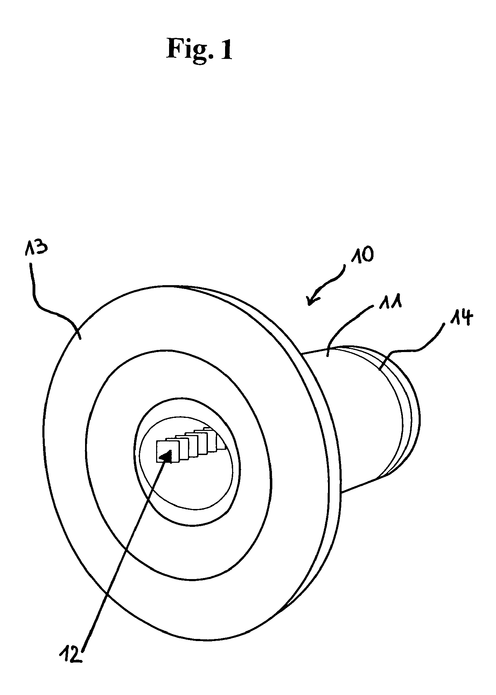

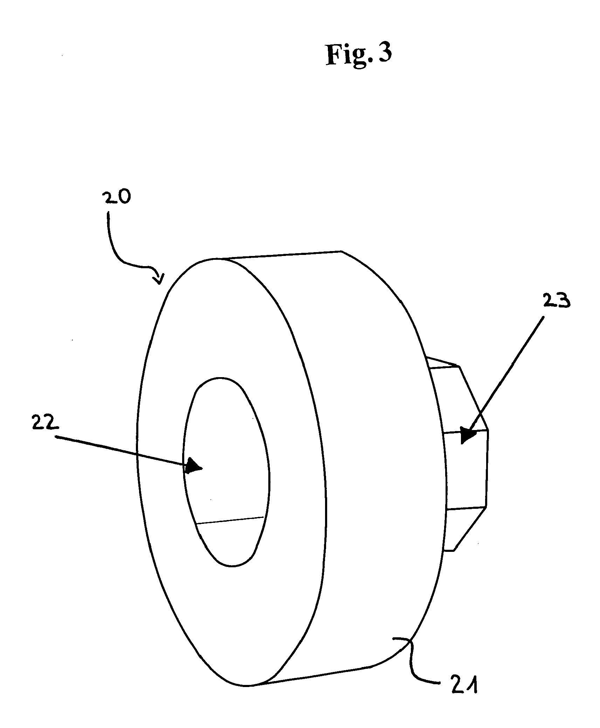

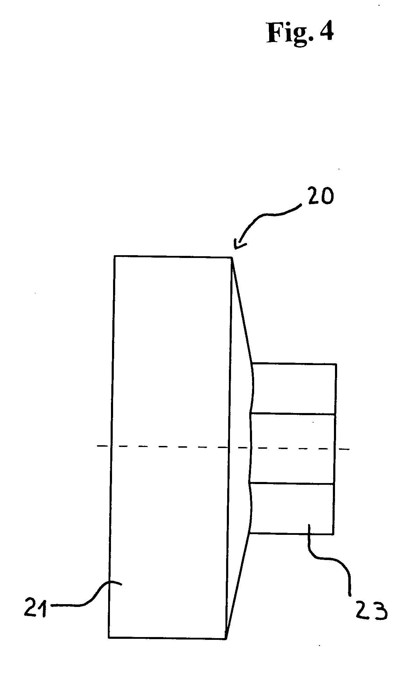

Im Weiteren wird nun das in den Figuren dargestellte Ausführungsbeispiel der Erfindung näher erläutert. So zeigt Fig. 1 ein Hülsenteil 10 in perspektivischer Ansicht, welches einen zylindrischen Grundkörper 11 aufweist, an dessen Innendurchmesser eine Vielzahl von Vorsprüngen 12 vorgesehen sind. Ferner weist das Hülsenteil 10 einen Kragen 13 auf, welcher formschlüssig an einem Sanitärausstattungsgegenstand, wie beispielsweise einem Waschbecken angebracht werden kann. An dem am Kragen 13 gegenüberliegenden Ende des Hülsenteils 13 befindet sich am zylindrischen Grundkörper 11 ein Außengewinde 14, auf welches ein in Fig. 3 und 4 dargestelltes Arretierungsteil aufgeschraubt werden kann.

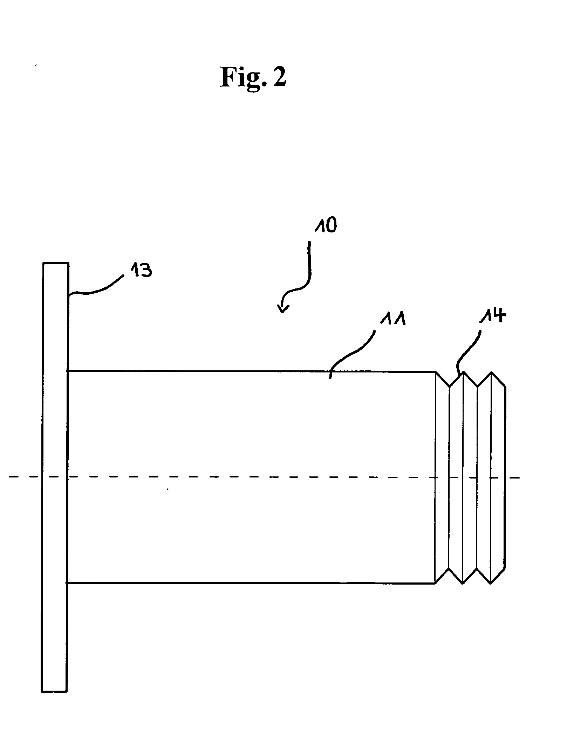

Wie in Fig. 2 gezeigt, ist das Außengewinde 14 nur an dem Endbereich des Hülsenteils 10 angebracht, welcher dem Kragen 13 gegenüberliegt.

Die Fig. 3 und 4 zeigen jeweils ein Arretierungsteil 20, welches einen zylindrischen Grundkörper 21 aufweist, wobei ein nicht dargestelltes Innengewinde 22 am Arretierungsteil 20 vorgesehen ist, um auf das Außengewinde 14 des Hülsenteils 10 aufgeschraubt werden zu können. Ferner ist ein metrischer Kopf 23 als Aufnahme für einen handelsüblichen Montageschlüssel vorgesehen, um das Hülsenteil 10 mit dem Arretierungsteil 20 in effektiver Art und Weise zu verschrauben.

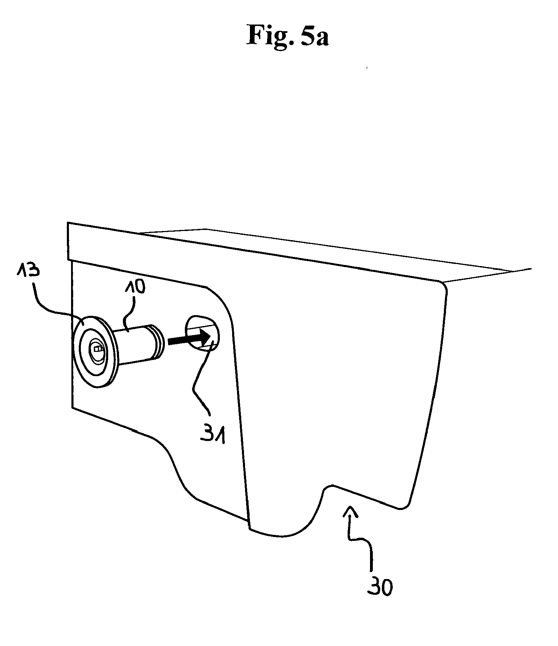

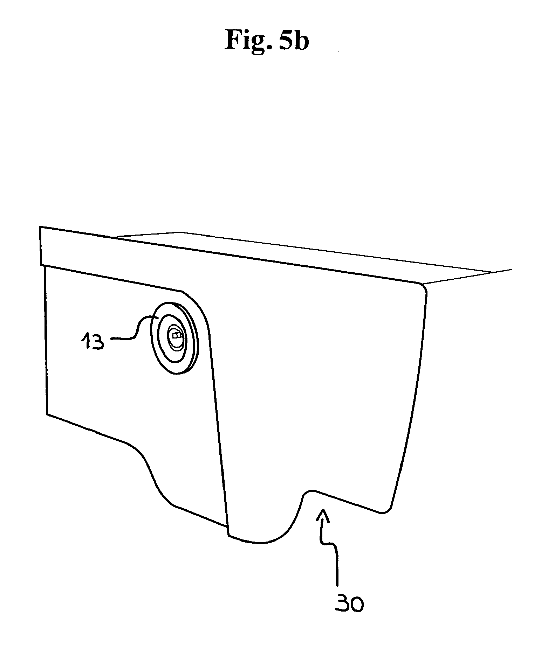

Die Fig. 5a bis 5d zeigen die Vorinstallation der erfindungsgemäßen Befestigungsvorrichtung, bevor der Sanitärausstattungsgegenstand auf die Wandschrauben aufgeschoben wird. Gemäß Fig. 5a wird das Hülsenteil 10 in eine Befestigungsöffnung 31 des Sanitärausstattungsgegenstandes 30 derart eingesetzt, dass der Kragen 13 des Hülsenteils am Sanitärausstattungsgegenstand 30 anliegt, wie in Fig. 5b gezeigt.

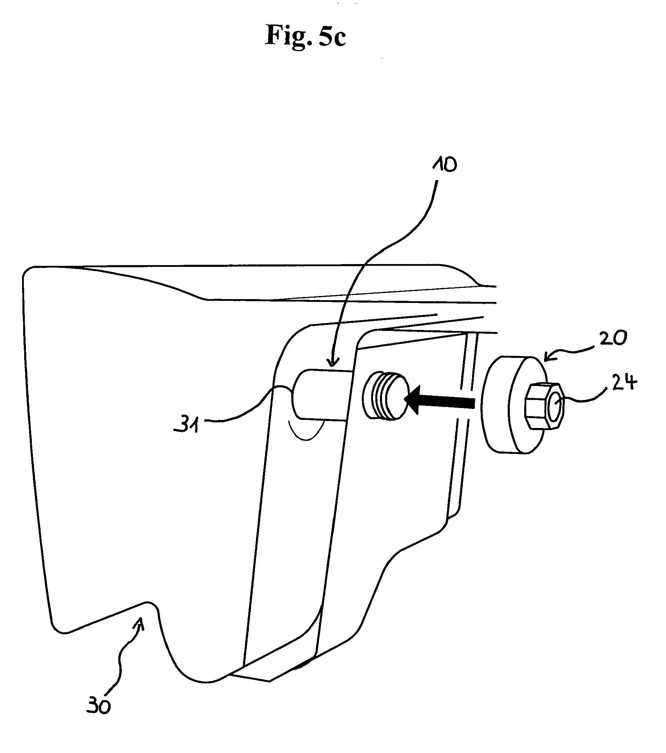

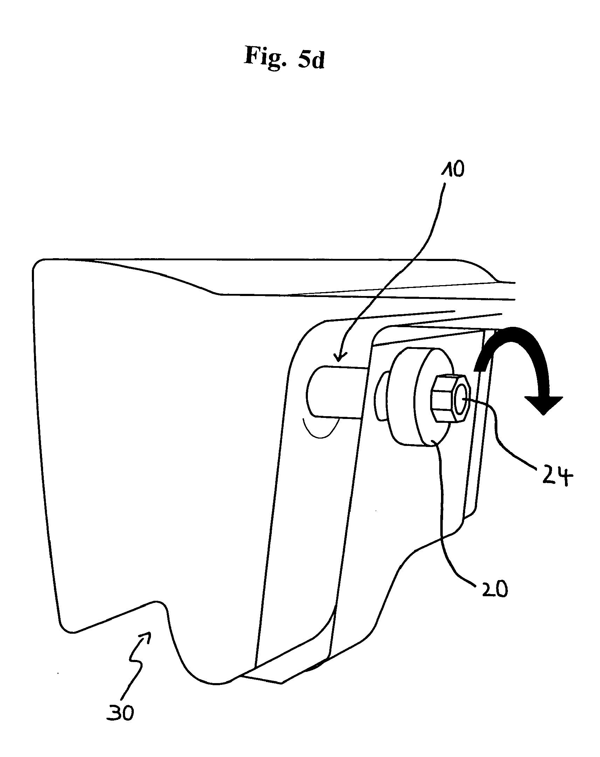

Gemäß Fig. 5c ist dargestellt, dass das Hülsenteil 10 durch die Befestigungsöffnung 31 des Sanitärausstattungsgegenstands herausragt, wobei insbesondere das Außengewinde 14 des Hülsenteils 10 aus dem Sanitärausstattungsgegenstand 30 herausragt, so dass das Arretierungsteil 20 und insbesondere das Innengewinde 22 mit dem Außengewinde 14 verschraubt werden kann, wie in Fig. 5d dargestellt ist.

Wie aus den Fig. 5c und 5d ersichtlich ist, kann das Arretierungsteil 20 eine durchgängige Innenbohrung 24 aufweisen, durch welche sich eine Wandschraube hindurch erstrecken kann.

Fig. 5d zeigt somit den Sanitärausstattungsgegenstand 30 zusammen mit dem vormontierten Hülsenteil 10 und dem daran ebenso vormontierten Arretierungsteil 20, welches in diesem vormontierten Zustand keine oder auch eine geringe Zugkraft auf den Sanitärausstattungsgegenstand ausüben kann.

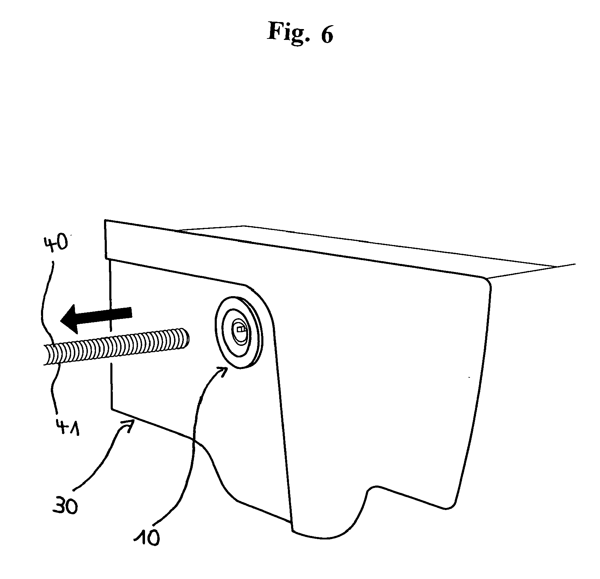

Wie in Fig. 6 gezeigt, kann der mit dem Hülsenteil 10 und dem Arretierungsteil 20 vormontierte Sanitärausstattungsgegenstand 30 gemäß dem dargestellten Pfeil auf eine Wandschraube 40 aufgeschoben werden, welche ein Außengewinde 41 aufweist. Während des Aufschiebens des Sanitärausstattungsgegenstands 30 auf die Wandschraube 40 werden die Vorsprünge 12 am Innendurchmesser des zylindrischen Grundkörpers 11 mit dem Außengewinde 41 der Wandschrauben 40 in Eingriff gebracht. Wie in Fig. 6 dargestellt, sind die Vorsprünge 12 insbesondere an zumindest einer Seite am Innendurchmesser des Hülsenteils 10 vorgesehen und sind derart ausgeführt, dass diese klauenartig lediglich ein Aufschieben ermöglichen, wobei das Material, die Form und die Größe dieser Vorsprünge derart vorbestimmt sind, dass das Hülsenteil nach dem vollständigen Aufschieben auf die Wandschraube 41 an dieser fixiert ist, so dass ein Herausziehen des Hülsenteils in entgegengesetzte Richtung nicht möglich ist.

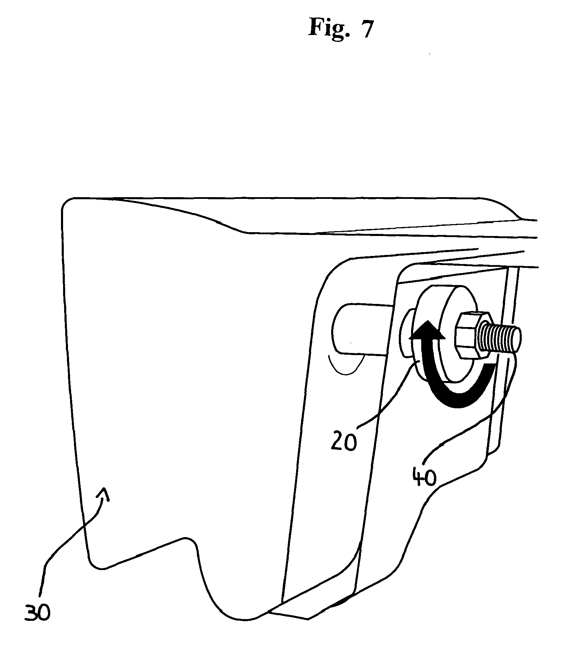

Fig. 7 zeigt nun die endgültige Montage des Sanitärausstattungsgegenstands 30, wobei lediglich einige wenige Umdrehungen, insbesondere in etwa drei Umdrehungen des Arretierungsteils 20 gemäß dem dargestellten Pfeil erforderlich sind, um den Sanitärausstattungsgegenstand 30 endgültig an der Wand zu befestigen. Dabei übt das Arretierungsteil 20 eine Zugkraft auf das Hülsenteil 10 durch die Verschraubung aus, wobei das Hülsenteil 10 diese Zugkraft mittels der Vorsprünge 12 auf die Wandschraube überträgt, und wobei das Arretierungsteil 20 diese Zugkraft ebenso auf den Sanitärausstattungsgegenstand 30 ausübt. Wie in Fig. 7 dargestellt, ragt die Wandschraube 40 durch die Innenbohrung 24 des Arretierungsteils 20 hindurch. Dadurch ist es möglich, dass lediglich das Hülsenteil 10 und das Arretierungsteil 20 in ihrer geometrischen Ausführungsform auf den Sanitärausstattungsgegenstand 30 im Wesentlich angepasst werden, wobei die Wandschraube 40 eine beliebige Länge aufweisen kann.

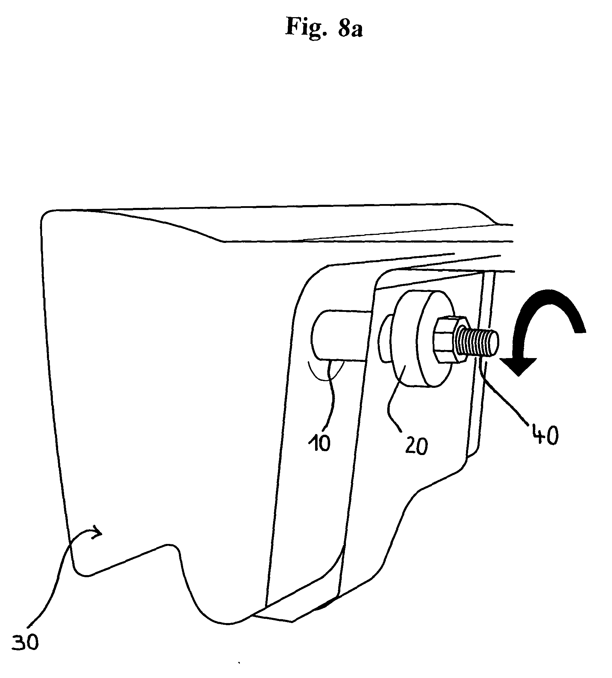

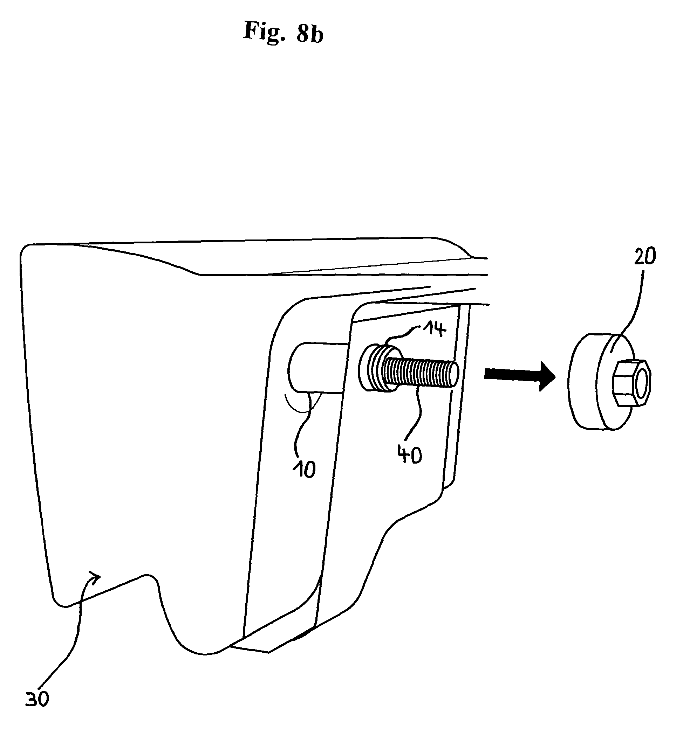

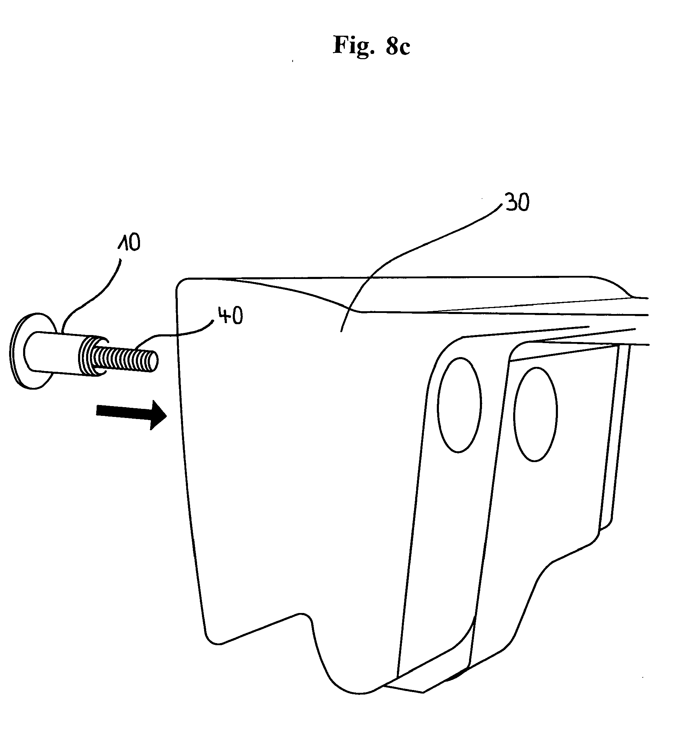

Gemäß den Fig. 8a bis 8c ist die Deinstallation der erfindungsgemäßen Befestigungsvorrichtung dargestellt. So zeigt Fig. 8a, dass analog zur Montage nur wenige Umdrehungen des Arretierungsteils 20 erforderlich sind, um die Verschraubung zwischen dem Außengewinde 14 des Hülsenteils und dem Innengewinde 22 des Arretierungsteils zu lösen, so dass das Arretierungsteil 20 von dem Hülsenteil und der Wandschraube 40 abgezogen werden kann, wie in Fig. 8b dargestellt. Anschließend daran kann der Sanitärausstattungsgegenstand gemäß dem dargestellten Pfeil von dem Hülsenteil 10 abgezogen werden, welches aufgrund der Vorsprünge 12 an der Wandschraube 40 noch gesichert ist. Als Folge davon verbleibt das Hülsenteil 10 zwar an der Wandschraube 40 und an der Wand, um ggf. für das Aufschieben eines zweiten Sanitärausstattungsgegenstandes genutzt zu werden, welcher lediglich durch wenige Umdrehungen mit dem Arretierungsteil 20 anschließend an dem Aufschieben des zweiten Sanitärausstattungsgegenstandes endgültig befestigt werden kann. Alternativ kann das an der Wandschraube 40 noch gesicherte Hülsenteil 10 von der Wandschraube 40 abgeschraubt werden, wobei die Vorsprünge 12 als ein Gewinde verwendet werden.

Für den Fachmann ist es ohne weiteres ersichtlich, dass die Vorsprünge des Hülsenteils lediglich eine bevorzugte Ausführungsform darstellen und dass das Hülsenteil im vormontierten Zustand mit der Wandschraube (auch in anderer Art und Weise) in Eingriff bringbar ist.

## Patentansprüche

1. Befestigungsvorrichtung für einen Sanitärausstattungsgegenstand (30), insbesondere Waschbecken, Waschtische, Bidets, Klosets, Urinale, Spülkästen, WC's in Kombination mit Spülkästen und dergleichen,
welche ein am Sanitärausstattungsgegenstand (30) vormontierbares Hülsenteil (10), welches in eine Befestigungsöffnung (31) des Sanitärausstattungsgegenstands (30) einsetzbar ist und welches bei der Anbringung des Sanitärausstattungsgegenstands (30) an einer Wand im am Sanitärausstattungsgegenstand (30) vormontierten Zustand mit einer aus der Wand hervorstehenden Wandschraube (40) in Eingriff bringbar ist,
und ein Arretierungsteil (20) umfasst, welches derart mit dem Hülsenteil (10) zusammenwirkt, dass der Sanitärausstattungsgegenstand (30) durch eine Zugkraft auf die Wandschraube (40) an der Wand befestigt wird, wobei das Arretierungsteil (20) die Zugkraft auf das Hülsenteil (10) ausübt, wobei das Hülsenteil (10) bei der Montage diese Zugkraft auf die Wandschraube (40) überträgt, und wobei das Arretierungsteil (20) bei der Montage diese Zugkraft auf den Sanitärausstattungsgegenstand (30) ausübt.

2. Vorrichtung nach Anspruch 1, **dadurch gekennzeichnet, dass** das vormontierbare Hülsenteil (10) an seinem Innendurchmesser Vorsprünge (12) aufweist, welche die Zugkraft bei der Montage auf die Wandschraube (40) übertragen, wobei die Vorsprünge (12) bereits ohne Ausübung der Zugkraft durch das Arretierungsteil (20) derart mit der Wandschraube (40) zusammenwirken, dass der Sanitärausstattungsgegenstand (30) an der Wandschraube (40) fixiert wird.

3. Vorrichtung nach Anspruch 1 oder 2, **dadurch gekennzeichnet, dass** das Hülsenteil (10) einen Kragen (13) aufweist, welcher im vormontierten Zustand an der der Wand zugewandten Seite des Sanitärausstattungsgegenstands (30) derart vorgesehen ist, dass der Sanitärausstattungsgegenstand (30) zusammen mit dem Hülsenteil (10) auf die Wandschraube (40) aufschiebbar ist.

4. Vorrichtung nach Anspruch 3, **dadurch gekennzeichnet, dass** der Kragen (13) in axiale Richtung des Hülsenteils (10) eine derartige Flexibilität aufweist, dass der Kragen (13) bei der Montage durch die Zugkraft des Arretierungsteils (20) in Richtung der Wand verformbar ist.

5. Vorrichtung nach einem der Ansprüche 3 oder 4, **dadurch gekennzeichnet, dass** das Hülsenteil (10) an dem dem Kragen (13) entgegengesetzten Ende ein Außengewinde (14) aufweist, welches mit einem Innengewinde (22) des Arretierungsteils (20) zur Aufbringung der Zugkraft in Eingriff bringbar ist.

6. Vorrichtung nach einem der Ansprüche 1 bis 5, **dadurch gekennzeichnet, dass** das Arretierungsteil (20) eine Aufnahme (23) für einen handelsüblichen Montageschlüssel aufweist, insbesondere einen metrischen Kopf.

7. Verfahren zur Befestigung von Sanitärausstattungsgegenständen, insbesondere unter Verwendung einer Befestigungsvorrichtung gemäß den Ansprüchen 1 bis 6, welches folgende Schritte aufweist:
Vorinstallation eines Hülsenteils (10) in eine Befestigungsöffnung (31) des Sanitärausstattungsgegenstands (30) vor dem Anbringen des Sanitärausstattungsgegenstands (30) an einer Wand, wobei ein Arretierungsteil (20) an dem Hülsenteil angebracht wird,
Aufschieben des Sanitärausstattungsgegenstands (30) zusammen mit dem vormontierten Hülsenteil (10) auf eine Wandschraube (40) bis zur Anlage des Sanitärausstattungsgegenstands (30) an der Wand,
Befestigen des Sanitärausstattungsgegenstands (30) an der Wand durch Aufbringung einer Zugkraft durch ein Arretierungsteil (20), welches derart mit dem Hülsenteil (10) zusammenwirkt, dass der Sanitärausstattungsgegenstand (30) durch die Zugkraft auf die Wandschraube (40) an der Wand befestigt wird, wobei die Zugkraft durch das Arretierungsteil (20) auf das Hülsenteil (10) ausgeübt wird, wobei diese Zugkraft durch das Hülsenteil (10) bei der Wandmontage auf die Wandschraube (40) übertragen wird und wobei diese Zugkraft auf den Sanitärausstattungsgegenstand (30) durch das Arretierungsteil (20) bei der Montage ausgeübt wird.

8. Verfahren nach Anspruch 7, **dadurch gekennzeichnet, dass** am Innendurchmesser des vormontierbaren Hülsenteils (10) Vorsprünge (12) vorgesehen sind, durch welche die Zugkraft bei der Montage auf die Wandschraube (40) übertragen wird, wobei die Vorsprünge (12) bereits ohne Ausübung der Zugkraft durch das Arretierungsteil (20) derart mit der Wandschraube (40) zusammenwirken, dass der Sanitärausstattungsgegenstand (30) an der Wandschraube fixiert wird.

9. Verfahren nach Anspruch 7 oder 8, **dadurch gekennzeichnet, dass** ein Innengewinde (22) des Arretierungsteil (20) mit einem Außengewinde (14) des Hülsenteils (10) derart verschraubt wird, dass bei der Montage der Sanitärausstattungsgegenstand (30) zwischen einem am Hülsenteil (10) angebrachten Kragen (13) und dem Arretierungsteil (20) unter Aufbringung der Zugkraft fixiert wird.

10. Verfahren nach Anspruch 9, **dadurch gekennzeichnet, dass** der Kragen (13) in axiale Richtung des Hülsenteils (10) eine derartige Flexibilität aufweist, dass der Kragen (13) bei der Montage durch die Zugkraft des Arretierungsteils (20) in Richtung der Wand verformt wird.
